# EUROPEAN PATENT APPLICATION

(11) **EP 4 306 409 A1**
(43) Date of publication of application: **17.01.2024**
(21) Application number: 22184776.7
(22) Date of filing: 13.07.2022
(51) Int. Cl.: B64C 9/02, B64C 13/50, B64C 29/00, B64C 9/16

(54) **ROTATING HINGE JOINT**

(71) Applicant: Lilium eAircraft GmbH, 82234 Wessling (DE)
(72) Inventor: CLEMENTS, Simon, 82234 Wessling (DE); SAINZ DE LA MAZA, Javier, 82234 Wessling (DE)
(74) Representative: Weickmann & Weickmann PartmbB

(57) **Abstract**

The present invention relates to a rotating hinge joint (10) for pivotably connecting one or more propulsion units and an airframe of a VTOL aircraft via an electric actuator, comprising a bracket assembly (12) for attachment to the airframe of the aircraft; an electric actuator (14) which comprises an output shaft (16) and a housing (18) which transfers torque to the bracket assembly (12); wherein the bracket assembly (12) is attached to the output shaft (16) in a rotatably fixed manner by means of an arm (12a); a double shear clevis assembly (22) with two arms (22a, 22b) for attachment to the propulsion unit structure (24), wherein the first arm (22a) of the clevis assembly (22) is attached to the housing of the electric actuator (18) in a rotatably fixed manner; wherein the attachment of the bracket assembly (12) to the output shaft (16) is located between the two arms (22a, 22b) of the clevis assembly (22) with respect to the axial direction (Y) of the output shaft (16) of the electric actuator (14). The invention furthermore relates to an attachment assembly comprising such a hinge joint (10) and a pivot assembly, as well as to a VTOL aircraft, comprising such hinge joints and/or attachment assemblies.

## Description

The present invention relates to a rotating hinge joint for pivotably connecting one or more propulsion units and an airframe of a VTOL aircraft via an electric actuator, an attachment assembly for pivotably connecting a propulsion unit structure, comprising such a hinge joint, as well as an airframe of a VTOL aircraft and a VTOL aircraft in which such a hinge joint and/or attachment assembly is employed.

In order to allow for adjusting the position of propulsion motors in VTOL aircraft between a takeoff and landing or hover configuration, in which the thrust of the propulsion engine is substantially oriented in a vertical direction, and a cruise configuration, in which the thrust of the propulsion motor is substantially directed in a horizontal direction, hinge joints have to be provided which enable a rotation of the propulsion unit structures carrying the propulsion motors of the aircraft around a substantially horizontal axis.

For this purpose, complex crowned splines and custom plain spherical bearings have been proposed for use in corresponding rotation hinge joints in order to be able to decouple the loads acting on the individual components in a beneficial manner. However, such configurations are relatively complex and heavy and thus there appears to be room for optimization.

Furthermore, it has been known in the art to use couplings or plain spherical bearings for similar purposes, which however tend to be even heavier. Also, both mentioned types of rotating hinge joints known in the art take up a large volume, and it is usually desired in aircraft design to minimize both weight and volume of mechanical components for reasons of operational efficiency of the corresponding aircraft.

It is thus an object of the present invention to enable the connection between one or more propulsion units and an airframe of a VTOL aircraft via an electric actuator by means of a rotating hinge joint with minimal weight and size, which is furthermore able to minimize the backlash of the torque transfer chain. It is thus desired to reduce the volume and weight allocation for said rotating hinge joint, such that the present invention has to bring together multiple design aspects into a compact and application specific solution, which is able to satisfy the strict safety requirements of airplane construction and minimizes backlash during operation of the associated propulsion motors.

In order to solve the above-cited object, the present invention proposes a rotating hinge joint for pivotably connecting one or more propulsion units and an airframe of a VTOL aircraft via an electric actuator, comprising a bracket assembly for attachment to the airframe of the aircraft, an electric actuator which comprises an output shaft and a housing which transfers torque to the bracket assembly, wherein the bracket assembly is attached to the output shaft in a rotatably fixed manner by means of an arm, a double shear clevis assembly with two arms for attachment to the propulsion unit structure, wherein the first arm of the clevis assembly is attached to the housing of the electric actuator in a rotatably fixed manner, wherein the attachment of the bracket assembly to the output shaft is located between the two arms of the clevis assembly with respect to the axial direction of the output shaft of the axial electric actuator.

Thus, by constructing a rotating hinge joint in this manner, a minimum weight and volume allocation for this interface is achieved, while at the same time, the reliability of the hinge joint is improved by simplifying its architecture compared to a more complex linkage connection. Furthermore, by using an interference fit spline output shaft, a double shear clevis and journal bearings, the hinge joint according to the present invention becomes the torque transfer link between the propulsion unit structure and the airframe of the VTOL aircraft, wherein in certain embodiments, the bracket assembly may be attached to a wing of the aircraft. Similarly, the hinge joint may form the main datum of the propulsion unit to the wing and the backlash of the torque transfer system may be reduced while increasing torsional stiffness. Furthermore, the rotating hinge joint of the present invention is fail-safe and due to its simplified structure simplifies packaging, inspection and maintenance.

In certain embodiments of the rotating hinge joint according to the present invention, the second arm of the clevis assembly may be rotatably supported on the output shaft by means of journal bearings and/or the output shaft of the electric actuator may be supported in the electric actuator by means of a bearing, in particular a ball bearing which is located with respect to its axial direction at least partially overlapping with the first arm of the clevis assembly. This feature leads to a further compactification of the hinge joint as well as improved force and torque distribution therein.

Furthermore, in the hinge joint according to the present invention, the output shaft may be provided with a threaded anti-rotation shaft nut, which simplifies its sealing and thus also contributes to easier inspection and maintenance of the assembly.

While different materials may be used for manufacturing the individual components forming the rotating hinge joint according to the present invention, in particular the bracket assembly and/or the clevis assembly may at least partially be made from steel and/or aluminum and/or an aluminum alloy. Such materials are widely used in aircraft design and can be chosen in order to find an optimum balance between mechanical stiffness and other mechanical properties of the resulting components as well as their weight.

According to another aspect, the present invention relates to an attachment assembly for pivotably connecting a propulsion unit structure and an airframe of a VTOL aircraft, comprising a rotating hinge joint as previously introduced located on a first side of the propulsion unit structure, and a pivot assembly located on a second, opposite side of the propulsion unit structure, wherein the pivot assembly comprises a second bracket assembly for attachment to the airframe of the aircraft, a second clevis assembly for attachment to the propulsion unit structure and a pivot pin defining a pivot axis for relative rotation between the second bracket assembly and the second clevis assembly, wherein the pivot pin and the output shaft of the electric actuator of the rotating hinge joint are aligned with respect to their axial directions.

By thus mounting the propulsion unit structure on both opposite sides along its pivot axis, an improved distribution of torques and forces can be achieved, while by providing an electric actuator only on one side thereof, the weight and complexity of the overall design can be reduced in a beneficial manner.

Similar to the rotating hinge joint, in such embodiments, the second clevis assembly of the pivot assembly may also be formed as a double shear clevis assembly with two arms, between which the connection point of the second bracket assembly to the pivot pin is positioned with respect to the axial direction thereof.

In the attachment assembly according to the present invention, the rotating hinge joint may provide for fixation of the bracket assembly and the clevis assembly with respect to the axial direction of the output shaft, while the pivot assembly may provide for a connection of the second bracket assembly and the second clevis assembly in a floating manner with respect to the axial direction of the pivot pin. Thus, an over-constraining of the system is avoided and excessive shear forces along the direction of the pivot axis can be prevented.

According to a further aspect, the present invention relates to a VTOL aircraft, comprising a fuselage, at least one pair of wings, wherein the fuselage and the wings form the airframe of the aircraft, a plurality of propulsion unit structures comprising propulsion motors, wherein the propulsion unit structures are connected to the airframe of the aircraft by means of rotating hinge joints according to the present invention and/or attachment assemblies according to the present invention.

In particular, the propulsion unit structures in aircraft according to the present invention may be formed as flaps pivotably mounted to the trailing edges of the wings and each carrying at least one propulsion motor. Said propulsion motors may in particular comprise electrically driven motors, for example in a ducted fan configuration.

Furthermore, the present invention relates to a method for assembling an attachment assembly as described above, concerning the rotating hinge joint comprising the steps of positioning the bracket assembly, the clevis assembly and the journal bearing in a predetermined alignment, rigidly connecting the output shaft of the electric actuator to the bracket assembly; and rigidly connecting the housing of the electric actuator to the propulsion unit structure.

Said method concerning the pivot assembly may further comprise the steps of pre-assembling the second bracket assembly and a bearing, positioning the second bracket assembly and bearing in between the two arms of the second clevis assembly, and installing the pivot pin. It is obvious that said method for assembling an attachment assembly according to the present invention can be performed more easily and efficiently than what would be the case with assemblies known from the prior art for similar purposes.

The method may further also comprise an installation of an anti-rotation washer, a shaft nut and/or lockwire in an axial end section of the output shaft and/or the pivot pin for fixing the assembly and as fastener retention features.

Lastly, the step of rigidly connecting the output shaft of the electric actuator to the bracket assembly may be performed by a step of pressing and/or shrinking thereof, which further facilitates the assembling of the attachment assembly according to the present invention.

Further features and advantages of the present invention will become even clearer from the following description of embodiments thereof when taken together with the accompanying drawings. Said drawings in particular show:
- Fig. 1: a rotating hinge joint according to the present invention in a cross-sectional view;
- Fig. 2: an attachment assembly according to the present invention in a cross-sectional view;
- Fig. 3: the attachment assembly of Fig. 2 integrated with a propulsion unit structure of a VTOL aircraft; and
- Fig. 4: a schematic view of a VTOL aircraft according to the present invention.

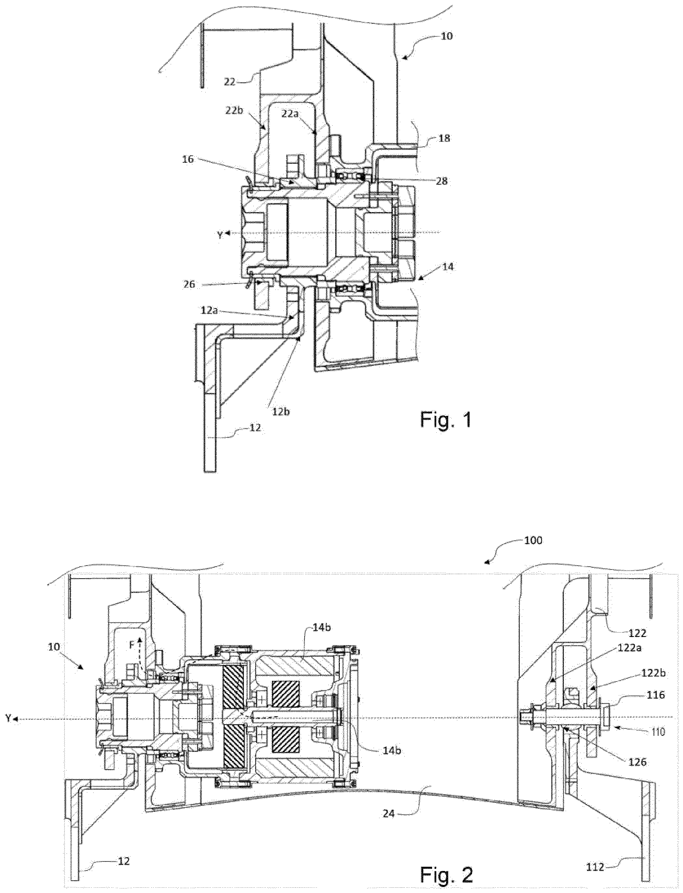

In Fig. 1, a rotating hinge joint according to the present invention is shown in a cross-sectional view and generally denoted with reference numeral 10.

Said rotating hinge joint 10 comprises a fail-safe bracket assembly 12 for attachment to the airframe of an aircraft and an electric actuator 14, which in turn comprises an interference fit spline output shaft 16 defining with its axial direction Y the pivot axis of the hinge joint 10. Said output shaft 16 is rotated during operation of the electric actuator 14 with respect to a housing 18 thereof. By means of said interference fit spline 16, the bracket assembly 12 is attached to the output shaft 16 in a rotatably fixed manner via of a first arm 12a of the bracket assembly 12.

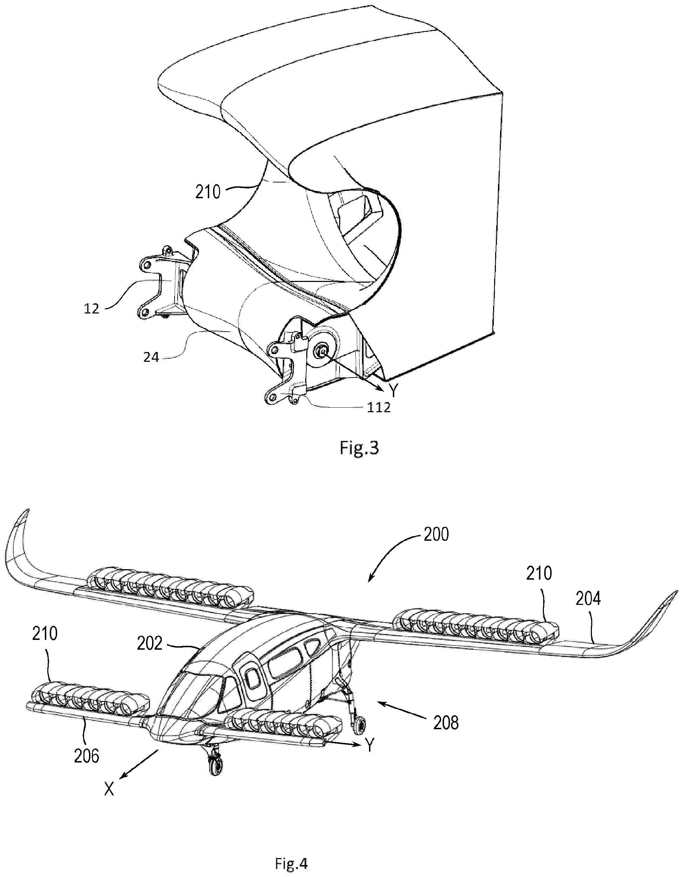

On the other hand, a double shear clevis assembly 22 with two arms 22a and 22b for attachment to a propulsion unit structure 24 (shown in Fig. 2 and 3) comprising one or more propulsion units is provided. Therein, the first arm 22a of the clevis assembly 22 is attached to the housing of the electric actuator 14 in a rotatably fixed manner, and the second arm 22b of the clevis assembly 22 is rotatably supported on the output shaft 16 by means of journal bearings 26.

Reference shall furthermore be made to a bearing 28, in particular a ball bearing, by means of which the output shaft 16 is supported in the electric actuator 14. Said ball bearing 28 is located with respect to the axial direction Y of the rotating hinge joint 10 partially overlapping with the first arm 22a of the clevis assembly 22 for improved torque and force transfer. Such a force flow from the electric actuator 14 through the rotating hinge joint 10 is visualized in Fig. 2 by means of arrow F.

With the rotating hinge joint 10 as shown in Fig. 1 and 2, during rotational operation of the electric actuator 14, a pivoting between the bracket assembly 12 and the clevis assembly 22 can be achieved, which translates to a pivoting of the propulsion unit structure 24 shown in Fig. 2 and the airframe of an aircraft to which the bracket assembly 12 is attached, which will be demonstrated below with reference to Fig. 3.

In Fig. 2, an attachment assembly 100 for pivotably connecting a propulsion unit structure 24 and an airframe of a VTOL aircraft is shown, which on its one side in direction Y comprises the rotating hinge joint 10 as shown in Fig. 1 and discussed above. It can be seen that the electric actuator 14 with its stator 14a and rotor 14b connected to the output shaft 16 takes up about half the width of the propulsion unit structure 24 in axial direction Y.

Opposite to the rotating hinge joint 10, a pivot assembly 110 is provided, which in a similar manner as the rotating hinge joint 10 allows for a pivoting of the propulsion unit structure 24 with respect to the airframe. For this purpose, the pivot assembly 110 comprises a second bracket assembly 112 for attachment to the airframe of the aircraft, a second clevis assembly 122 for attachment to the propulsion unit structure 24 and a pivot pin 116 defining a pivot axis Y for relative rotation between the second bracket assembly 112 and the second clevis assembly 122. Herein, the pivot pin 116 and the output shaft 16 of the electric actuator 14 of the rotating hinge joint 10 are aligned with respect to their axial directions Y.

In the embodiment shown in Fig. 2, the second clevis assembly 122 is formed similarly to the clevis assembly 22 of the rotating hinge joint 10 with two arms 122a and 122b. It shall further be noticed that the rotating hinge joint 10 provides for fixation of the bracket assembly and the clevis assembly with respect to the pivot axis Y of the output shaft 16 of the electric actuator 14, while the pivot assembly 110 provides for a connection of the second bracket assembly 112 and the second clevis assembly 122 in a floating manner with respect to the axial direction Y of the pivot pin 116. For this purpose, a suitable bearing 126 is used for supporting the second bracket assembly 112 on the pivot pin 116 in a floating manner.

In Fig. 3, the above-mentioned propulsion unit structure 24 is shown in an isometric view with the attachment assembly 100 integrated therewith. It can be seen that the two bracket assemblies 12 and 112 extend on both sides of the propulsion unit structure 24 with respect to the direction of the axis Y and allow for an attachment of the propulsion unit structure 24 on the airframe of an aircraft, in particular its wings, in a pivotable manner. By pivoting the propulsion unit structure 24 around the axis Y as discussed above, it becomes possible to adjust the direction of the thrust produced by the propulsion motor 210 integrated with the propulsion unit structure 24 as described below with reference to the VTOL aircraft shown in Fig, 4.

Lastly, in Fig. 4, said VTOL aircraft is shown and generally denoted with reference numeral 200. The aircraft 200 comprises a fuselage 202, a pair of wings 204 and a pair of canard wings 206 positioned in front of the wings 204 with respect to the main horizontal flying direction X of the aircraft 200. Herein the fuselage 202, the wings 204 and the canards 206 form the airframe 208 of the aircraft 200.

To each of the wings 204 and the canard wings 206, a plurality of propulsion unit structures 24 are connected by means of attachment assemblies 100 as shown in Fig. 2 and Fig. 3.

Said attachment assemblies 100 allow for a pivoting of the propulsion unit structures 24 with respect to the respective wing 204 or canard wing 206 and thus the airframe 208 around the respective axes Y, wherein each propulsion unit structure 24 is formed as a flap pivotably mounted to the trailing edges of the respective wings 204 or canard wings 206 and carrying at least one propulsion motor 210. Herein, the propulsion motors 210 may be formed by electrically driven rotors, in particular in ducted fan configurations.

## Claims

1. Rotating hinge joint (10) for pivotably connecting one or more propulsion units (24) and an airframe (208) of a VTOL aircraft (200) via an electric actuator (14), comprising:
- a bracket assembly (12) for attachment to the airframe (208) of the aircraft (200);
- an electric actuator (14) which comprises an output shaft (16) and a housing (18) which transfers torque to the bracket assembly (12);
wherein the bracket assembly (12) is attached to the output shaft (16) in a rotatably fixed manner by means of an arm (12a);
- a double shear clevis assembly (22) with two arms (22a, 22b) for attachment to the propulsion unit structure (24),
wherein the first arm (22a) of the clevis assembly (22) is attached to the housing of the electric actuator (18) in a rotatably fixed manner; wherein the attachment of the bracket assembly (12) to the output shaft (16) is located between the two arms (22a, 22b) of the clevis assembly (22) with respect to the axial direction (Y) of the output shaft (16) of the electric actuator (14).

2. Hinge joint (10) according to claim 1,
wherein the second arm (22b) of the clevis assembly (22) is rotatably supported on the output shaft (16) by means of journal bearings (26).

3. Hinge joint (10) according to claim 1,
wherein the output shaft (16) is supported in the electric actuator (14) by means of a bearing (28), in particular a ball bearing, which is located with respect to its axial direction (Y) at least partially overlapping with the first arm (22a) of the clevis assembly (22).

4. Hinge joint (10) according to any of the preceding claims,
wherein the output shaft (16) is provided with a threaded anti-rotation shaft nut (20).

5. Hinge joint (10) according to any of the preceding claims,
wherein the bracket assembly (12) and or the clevis assembly (22) are at least partially made from steel and/or aluminum and/or an aluminum alloy.

6. Attachment assembly (100) for pivotably connecting a propulsion unit structure (24) and an airframe (208) of a VTOL aircraft (200), comprising:
- a rotating hinge joint (10) according to any of the preceding claims located on a first side of the propulsion unit structure (24), and
- a pivot assembly (110) located on a second side of the propulsion unit structure (24);
wherein the pivot assembly (110) comprises:
∘ a second bracket assembly (112) for attachment to the airframe (208) of the aircraft;
∘ a second clevis assembly (122) for attachment to the propulsion unit structure (24); and
∘ a pivot pin (116) defining a pivot axis (Y) for relative rotation between the second bracket assembly (112) and the second clevis assembly (122);
wherein the pivot pin (116) and the output shaft (16) of the electric actuator (14) of the rotating hinge joint (10) are aligned with respect to their axial directions (Y).

7. Attachment assembly (100) according to claim 6
wherein the second clevis assembly (122) is formed as a double shear clevis assembly with two arms (122a, 122b).

8. Attachment assembly (100) according to any of claims 6 and 7,
wherein the rotating hinge joint (10) provides for a fixation of the bracket assembly (12) and the clevis assembly (22) with respect to the axial direction (Y) of the output shaft (16), while the pivot assembly (110) provides for a connection of the second bracket assembly (112) and the second clevis assembly (122) in a floating manner with respect to the axial direction (Y) of the pivot pin (116).

9. VTOL aircraft (200), comprising:
- a fuselage (202);
- at least one pair of wings (204, 206);
wherein the fuselage (202) and the wings (204, 206) form the airframe (208) of the aircraft (200); and
- a plurality of propulsion unit structures (24) comprising propulsion motors (210);
wherein the propulsion unit structures (24) are connected to the airframe (208) of the aircraft (200) by means of rotating hinge joints (10) according to any of claims 1 to 5 and/or attachment assemblies (100) according to any of claims 6 to 8

10. VTOL aircraft (200) according to claim 9,
wherein the propulsion unit structures (24) are formed as flaps pivotably mounted to the trailing edges of the wings (204, 206) and each carrying at least one propulsion motor (210).

11. VTOL aircraft (200) according to any of claims 9 and 10,
wherein the propulsion motors (210) comprise electrically driven rotors, in particular in a ducted fan configuration.

12. Method for assembling an attachment assembly according to any of claims 6 to 8, comprising the steps:
- positioning the bracket assembly (12), the clevis assembly (22) and the journal bearing (26) in a predetermined alignment;
- rigidly connecting the output shaft (16) of the electric actuator (14) to the bracket assembly (12); and
- rigidly connecting the housing (18) of the electric actuator (14) to the propulsion unit structure (24).

13. Method according to claim 12, further comprising the steps:
- pre-assembling the second bracket assembly (112) and a bearing (126);
- positioning the second bracket assembly (112) and bearing (126) in between the two arms (122a, 122b) of the second clevis assembly (122); and
- installing the pivot pin (116).

14. Method according to any of claims 12 and 13, further comprising the installation of an anti-rotation washer, a shaft nut and/or lockwire in an axial end section of the output shaft (16) and/or the pivot pin (116).

15. Method according to any of claims 12 to 14, wherein the step of rigidly connecting the output shaft (16) of the electric actuator (14) to the bracket assembly is performed by a step of pressing and/or shrinking thereof.
